# EUROPÄISCHE PATENTSCHRIFT

(11) **EP 3 644 766 B1**
(45) Veröffentlichungstag und Bekanntmachung des Hinweises auf die Patenterteilung: **06.10.2021**
(21) Anmeldenummer: 18743383.4
(22) Anmeldetag: 22.06.2018
(51) Int. Cl.: A23N 4/06, A23N 3/04

(54) **MASCHINE UND VERFAHREN ZUM ENTSTEINEN VON FRÜCHTEN**
MACHINE AND METHOD FOR PITTING FRUITS
MACHINE ET PROCÉDÉ POUR DÉNOYAUTER DES FRUITS

(30) Priorität: 27.06.2017 DE 202017103821 U
(43) Veröffentlichungstag der Anmeldung: 06.05.2020
(73) Patentinhaber: Dinter, Axel, 20459 Hamburg (DE)
(72) Erfinder: Dinter, Axel, 20459 Hamburg (DE)
(74) Vertreter: Hansen, Jochen
(86) Internationale Anmeldenummer: PCT/DE2018/100583
(87) Internationale Veröffentlichungsnummer: WO 2019/001633

(56) Entgegenhaltungen:
- DE-B3-102005 018 639
- US-A- 1 329 023
- US-A- 3 061 070
- US-A1- 2012 258 223

## Beschreibung

Die Erfindung betrifft eine Maschine zum Entsteinen von Früchten mit einer Vielzahl von Stößeln und einer Vielzahl von Aufnahmeelementen für die zu entsteinenden Früchte, wobei jedes Aufnahmeelement einen eine einzelne Frucht aufnehmenden Napf mit Durchtrittsöffnung für den aus der Frucht herauszulösenden Stein hat, die Aufnahmeelemente auf einer umlaufenden Aufnahmeelementebahn und die Stößel auf einer umlaufenden Stößelbahn entlang einer Arbeitsstrecke parallel und synchron zueinander geführt und entlang der Arbeitsstrecke Mittel zur Ausführung einer Hubbewegung der Stößel relativ auf die Näpfe zu vorgesehen sind. Ferner betrifft die Erfindung ein Verfahren zum Entsteinen von Früchten mit dieser Maschine.

Eine derartige Maschine bzw. Verfahren ist aus der US 3,061,070 A bekannt. Dort wird eine Obstbehandlungsmaschine zum Entkernen von Kirschen oder anderen kugelförmigen Stein-Früchten beschrieben, bei der Aufnahmeelemente auf einer umlaufenden Aufnahmeelementebahn und Stößel auf einer umlaufenden Stößelbahn geführt und entlang einer Arbeitsstrecke Mittel zur Ausführung einer Hubbewegung der Stößel relativ auf die Näpfe zu vorgesehen sind. Dabei wird die einzeln zu bearbeitende Frucht in einem schalenförmigen Napf abgelegt und durch einen rotierend angetriebenen Stößel ausgerichtet.

Ferner ist aus der DE 814 963 eine Kirschenentkernmaschine bekannt. Durch den elastisch ausgebildeten Napf wird mit dieser Kirschenentkernmaschine erreicht, dass auch nicht zentral angeordnete Kerne oder Kerne unterschiedlicher Größe von einem Stempel erfasst und radial durch die Frucht ohne Zerstörung des Kerns oder Steins hindurch bewegt und ausgeworfen werden. Somit konnte mit dieser Vorrichtung das unerwünschte Zertrümmern von Steinen weitgehend vermieden werden.

Gleichwohl besteht das Problem, dass nicht ordnungsgemäß entsteinte Früchte als vermeintlich entsteinte Früchte ausgegeben werden. Dabei hat sich herausgestellt, dass gerade der diskontinuierliche Lauf beim Entsteinen dazu führt, dass die in einem napfartigen Aufnahmeelement aufgenommene Frucht teils trotz geeigneter Formgebung nicht ausreichend zentriert in dem Napf liegt, sodass der Stößel zum Austreiben des Steins diesen nicht oder nicht optimal zentriert erfasst und somit seitlich abdrängt oder doch zertrümmert. Dieses Problem wurde bereits in der DE 41 12 548 C1 erkannt und ein kontinuierlicher Lauf der dort als Entsteinplatten bezeichneten Aufnahmen für die Früchte beschrieben. Nachteilig an dieser Vorrichtung ist weiterhin der diskontinuierliche Lauf der Hubeinrichtung, was sowohl energetisch wenig sinnvoll und hinsichtlich der hin- und hergehenden Massen zu unerwünschten Schwingungen und höherem Verschleiß führt.

Andererseits beschreibt die DE 10 2005 018 639 B3 eine Erfolgskontrolle bei der Steinobstentkernung, bei der eine Einrichtung zum Überwachen eines Entkernweges auf ein vorbestimmtes Ereignis vorgesehen ist, wobei die Einrichtung zur Überwachung des Entkernweges Röntgenstrahlungen verwendet.

Die DE 11 20 797 A beschreibt eine Entkernmaschine für Steinobst, insbesondere für Kirschen und Weichseln, bei der eine Bürstenwalze dazu dient, überschüssige Mengen des Obstes, also diejenigen Stücke, die sich nicht in einem Nest befinden, vom Trum zu entfernen, was jedoch teilweise zu Fehlbelegungen, zu Beschädigungen und/oder hygienischer Beeinträchtigung führen kann.

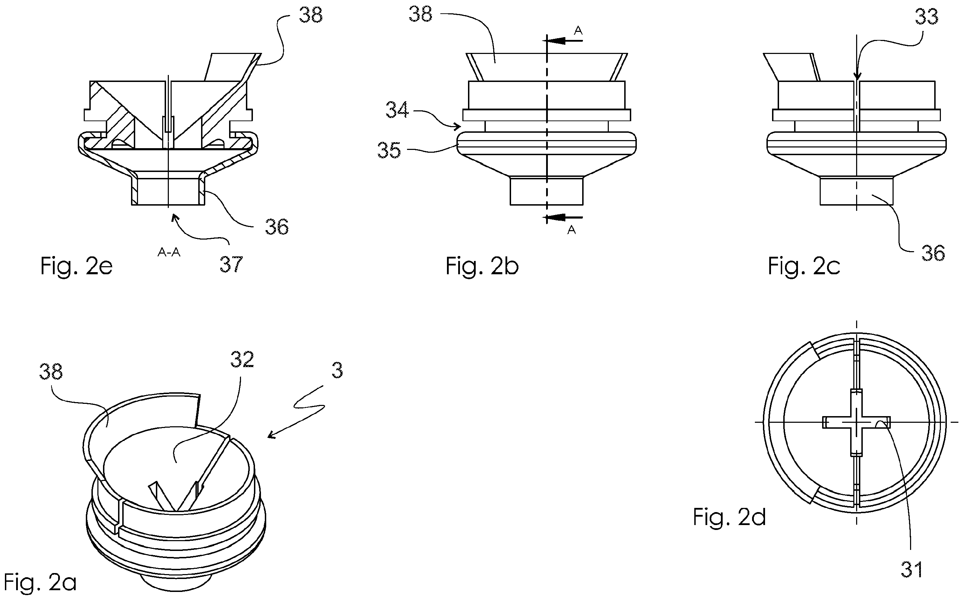

Die US 1,329,023 A betrifft eine Pflaumenentkernungsmaschine, die die zu entkernenden Pflaumen zwischen zwei Endlosbändern mit jeweils zugeordneten Halbschalen hält und parallel zu den Drehachsen der Endlosbänder einen Stößelmechanismus (Fig. 2) aufweist, der den Kern der jeweils gehaltenen Pflaume herausdrückt.

Die US 2012/258223 A1 beschreibt eine Maschine, ein System und ein Verfahren, zum Entsteinen von Früchten, wie Kirschen, Oliven, Datteln und oder Pflaumen. Dabei werden die Früchte beziehungsweise Fruchtstücke vereinzelt, um dann die Fruchtstücke zu entsteinen beziehungsweise entkernen zu können. Ein dafür vorgesehener Förderer weist Vertiefungen zur Aufnahme jeweils eines Fruchtstückes auf. Dabei führt der Förderer diese vereinzelten Fruchtstücke in einen Bereich, in dem das Entsteinen durch eine Matrix von Stanzen erfolgt. Die Matrix bewegt sich in einer oszillierenden Weise synchron mit der kontinuierlichen Bewegung der auf dem Förderer aufliegenden Fruchtstücke. Die Vereinzelung ermöglicht eine zielgenaue Verarbeitung, Sortierung und Qualitätsprüfung, bei dem das Entsteinen weitgehend zielsicher erfolgt. Mit einer Sensoreinrichtung vor dem Entsteinvorgang wird eine Qualitätsprüfung durchgeführt, wobei nicht geeignete oder doppelt belegte Vertiefungen erkannt und diese Fruchstücke entfernt werden können.

Insgesamt ist es daher Aufgabe der Erfindung, eine Maschine und ein Verfahren zum Entsteinen von Früchten anzugeben, bei der/dem eine Ausgabe von fehlerhaft entsteinten Früchten unterbunden wird.

Gelöst wird diese Aufgabe mit einer Maschine zum Entsteinen von Früchten gemäß Anspruch 1 und einem Verfahren zum Entsteinen von Früchten gemäß Anspruch 10.

Durch das Vorsehen von ersten Sensoren stromaufwärtig der Arbeitsstrecke können mit Früchten doppelt belegte Näpfe erfasst werden. Es hat sich nämlich herausgestellt, dass trotz einer vereinzelten Zuführung der Früchte zur Entsteinmaschine hin und wieder Näpfe mit zwei Früchten doppelt belegt werden, wonach ein ordnungsgemäßer Entsteinvorgang auf der Arbeitsstrecke nicht möglich ist. Durch die Erfassung mit Früchten doppelt belegter Näpfe können Vorkehrungen getroffen werden, dass Früchte auf dieser Position vor der Arbeitsstrecke aussortiert, bevorzugt ausgeblasen werden. Somit kann sicher vermieden werden, dass mit Früchten doppelt belegte Näpfe zu einem Fehler im Entsteinvorgang führen.

Ferner sind unterhalb der Arbeitsstrecke zweite Sensoren vorgesehen , die den Austritt des Steins erfassen. Wenn der Austritt des Steins der jeweils auf der Arbeitsstrecke bearbeiteten Frucht positiv erkannt wird, können Früchte an Positionen, an denen ein Austritt eines Steins nicht erfasst werden konnte, als möglicherweise fehlerhaft entsteinte Früchte aussortiert, bevorzugt ausgeblasen werden.

Mit der vorrichtungsgemäßen Gestaltung mit Sensoren stromaufwärtig und unterhalb der Arbeitsstrecke können ganz wesentliche Fehlerquellen für einen nicht ordnungsgemäßen Entsteinvorgang sicher erfasst und im Rahmen von Aussortiervorgängen behoben werden. Damit wird die Qualität des Entsteinvorganges messtechnisch mit sehr hoher Genauigkeit erfasst, sodass das Endprodukt, nämlich die entsteinten Früchte, frei von Steinen und Steinresten sind.

Der eine einzelne Frucht aufnehmende Napf kann dabei, wie meist im Stand der Technik bekannt, aus einem elastischen Kunststoff gebildet sein. Alternativ ist es aber auch möglich, dass der Napf bei einer entsprechend genauen Führung des zugeordneten Stößels aus einem festen Werkstoff, bevorzugt lebensmittelechtem Material, wie beispielsweise auch Edelstahl, hergestellt ist. Damit können auch sehr hohe hygienische Anforderungen erfüllt werde.

Da unterhalb der Durchtrittsöffnung am Napf eine elastische Muffe vorgesehen ist, durch die der aus der Frucht zu entfernende Stein mittels des Stößels durchdrückbar ausgebildet ist, wird der Stein beim Durchtreiben durch die Muffe von etwaig noch weiteren Fruchtfleischanhaftungen befreit. Ferner wird durch die Aufdehnung der Muffe das Austreiben des Steins leichter erfassbar.

Wenn auf der elastischen Muffe Markierungen, Magnetisierungen oder Dehnungsmessstreifen angeordnet sind, kann mit deren Hilfe ein Steinaustritt zuverlässig nachgewiesen werden.

Dadurch, dass stromabwärtig der Arbeitsstrecke eine Nachlesevorrichtung zum Aussortieren fehlerhaft entsteinter Früchte vor einer Ausgabe der entsteinten Früchte zur Weiterverarbeitung angeordnet ist, kann eine sehr hohe Fehlerfreiheit der ausgegebenen, entsteinten Früchte erreicht werden.

Wenn die Nachlesevorrichtung eine zweite Ausblasvorrichtung ist, die eine mit den zweiten Sensoren erkannte, fehlerhaft entsteinte Frucht in ein seitlich zur Transportrichtung an der Aufnahmeelementebahn angeordneten Aussortierbehälter ausbläst, werden stromabwärtig der Arbeitsstrecke fehlerhaft entsteinte Früchte vor einer Ausgabe der entsteinten Früchte zur Weiterverarbeitung aussortiert und in den Behälter ausgeblasen.

Dadurch, dass stromaufwärtig der Arbeitsstrecke und stromabwärtig der ersten Sensoren eine Vorauslesevorrichtung vorgesehen ist, können fehlerhaft auf die Aufnahmeelemente aufgelegte Früchte aussortiert werden. Auch hierzu ist bevorzugt eine Ausblasvorrichtung vorgesehen, die eine mit den ersten Sensoren erkannte, fehlerhaft auf ein Aufnahmeelement abgelegte Frucht erkennt. Dabei werden insbesondere doppelt belegte Aufnahmeelemente (Näpfe) erkannt, sodass durch Aufbringen eines gezielten Luftstoßes die auf diesem Aufnahmeelement fehlerhaft aufliegenden Früchte in Doppelbelegung vor der Arbeitsstrecke in einen Auffangbehälter ausgeblasen werden, also dieses Aufnahmeelement leer in die Arbeitsstrecke fährt. Ensprechend kann hier auch kein Fehler beim Entsteinen entstehen. Die ausgeblasenen Früchte können nochmals erneut zugeführt werden, da es sich meist nur um eine zufällige fehlerhafte Belegung eines Aufnahmeelementes handelt.

Dabei können als erste oder zweite Sensoren eine optische, akustische, magnetische Erfassung und/oder eine Erfassung mittels Dehnungsmessstreifen vorgesehen sein.

Bevorzugt hat der Stößel kreuzförmigen, fünfsternigen oder sechssternigen Querschnitt, wobei die Durchtrittsöffnung im Napf dazu passend ausgebildet ist. Damit wird das durch DE 814 963 beschriebene elastische Gegenlager zum Stempel, hier Stößel, insoweit optimiert, dass der Stein durch den Stößel durch elastisches Aufweiten der kreuzförmigen, fünfsternigen oder sechssternigen Durchtrittsöffung im Bewegungsvorgang weiter zentriert und gleichzeitig weitgehend das Fruchtfleisch abgestriffen wird.

Weiter ist die Stößelbahn oberhalb der Aufnahmeelementebahn angeordnet, damit die Früchte schwerkraftbedingt in den Aufnahmeelementen gehalten und die zu entfernenden Steine der Früchte von oben nach unten herausgeführt werden können.

Dadurch, dass auf der Stößelbahn ein Kurvenelement und für jeden Stößel eine Stößelhalterung vorgesehen sind, wobei die Hubbewegung des in der Stößelhalterung verschiebbar gehalterten Stößels durch das Kurvenelement gesteuert wird, wird die Hubbewegung durch Abgreifen des Kurvenelementes in Art einer Nockenführung im Bereich der Arbeitsstrecke ausgelöst. Entsprechend der Ausbildung des Kurvenelementes kann eine harmonische, verschleißarme Bewegung synchron zum Bewegungsablauf der gesamten Anlage erzeugt werden.

Wenn eine Hülse unter jeder Stößelhalterung vorgesehen ist, die sich bei der Hubbewegung des Stößels auf die Frucht setzt und nach dem Entsteinen die Frucht im Napf zurückhält, wird erreicht, dass die jeweilige Frucht nochmals besser zentriert und festgehalten wird. Zudem dient die quasi als Negativform zur zu entsteinenden Frucht ausgebildete Hülse als Abstreifer, damit die vom Stößel durchstoßene Frucht nicht am Stößel hängen bleibt und vom Napf abgehoben wird. Somit bleibt jede Frucht genau in dem Aufnahmeelement bzw. Napf liegen, in der sie entsteint wurde. Vorteilhaft wird die Hülse erst nach der Rückbewegung des Stößels angehoben, wenn der Stößel nach oben aus der Frucht aufgetaucht ist. Damit wird auch eine nachträgliche Bearbeitung (Nachlese) zur Qualitätssicherung vereinfacht bzw. erst ermöglicht. Durch die genaue Zuordnung der Frucht zum jeweiligen Aufnahmeelement (Napf) kann somit die Bearbeitung genau protokolliert und für eine Qualitätssicherung verwertet werden.

Bevorzugt ist an der Aufnahmeelementebahn stromaufwärtig der Arbeitsstrecke eine Früchtezuführanordnung zur vereinzelten Zuführung je einer zu entsteinenden Frucht auf je einen Napf vorgesehen, womit durch die Vereinzelung sichergestellt wird, dass je Napf nur eine Frucht aufliegt.

Verfahrensgemäß wird somit vor der Arbeitsstrecke zum Entsteinen der Früchte messtechnisch überwacht, ob eine Frucht oder mehrere Früchte auf einem Napf aufliegen. Wenn mehrere Früchte auf einem Napf aufliegen, werden diese ausgetragen. Somit wird dann dieser Napf zwar leer in die Arbeitsstrecke geführt, jedoch wird ein fehlerhafter Entsteinvorgang vermieden.

Nach dem Austragen der Früchte eines Napfes mit mehreren Früchten wird dieser Napf stromaufwärtig der Arbeitsstrecke überprüft, ob der Fruchtaustrag erfolgte und für den Fall eines fehlerhaften Austrags ein zweiter Austrag mittels Druckluftstoß vorgenommen wird, womit etwaige Selektionsfehler korrigiert werden. Wichtig ist dabei, dass dieser zweiter Versuch ebenfalls vor der Arbeitsstecke erfolgt, damit sichergestellt ist, dass nicht ordnungsgemäß aufliegende Früchte vom Napf entfernt werden, bevor diese in den Entsteinvorgang geführt werden.

Ferner wird die Arbeitsstrecke auf einen Steinaustritt unterhalb der Durchtrittsöffnung messtechnisch überwacht, wobei die Früchte jedes Napfes, aus dem ein Steinaustritt nicht nachgewiesen wurde, stromabwärtig der Arbeitsstrecke ausgetragen wird. Somit wird auch positiv überprüft, ob ein Stein beim Entsteinvorgang unterhalb der Durchtrittsöffnung ausgetrieben wird. Kann ein Steinaustritt nicht festgestellt werden, wird die so offensichtlich nicht richtig entsteinte Frucht von dem betreffenden Napf ausgetragen, insbesondere durch eine Ausblasvorrichtung seitlich in einen Auffangbehälter für anderweitig zu entsorgende Früchte mit etwaigen Steinen bzw. Steinresten ausgeblasen. Die übrigen ordnungsgemäß entsteinten Früchte werden auf deren Näpfen weiter zur Ausgabe für das entsteinte Fruchtfleisch geleitet.

Nach dem Austragen von fehlerhaft entsteinten Früchten stromabwärtig der Arbeitsstrecke wird an dem jeweiligen Napf überprüft, ob der Fruchtaustrag erfolgte, und für den Fall eines fehlerhaften Austrags ein zweiter Austrag mittels Druckluftstoß vorgenommen . Somit wird wiederum der Austrag auf denjenigen Näpfen überprüft, auf denen fehlerhaft entsteinte Früchte aufliegen. Somit kann der Fruchtaustrag hier nochmals in einer Art Nachlese überprüft und durch einen zweiten Versuch mittels Druckluftstoß aussortiert werden.

Insgesamt wird dabei eine sehr hohe Qualität des Entsteinvorgangs sichergestellt.

Nachfolgend wird die Erfindung anhand eines Ausführungsbeispiels unter Bezugnahme auf die beiliegenden Zeichnungen detailliert beschrieben.

Darin zeigt:
- Fig. 1: eine Maschine zum Entsteinen von Früchten
a) in schematischer Seitenansicht
b) mit im Detail einer darin eingesetzten Stößelanordnung und
c) in einer Detailansicht entsprechend X aus Fig. 1a) und
- Fig. 2: einen Napf eines Aufnahmeelementes in
a) räumlicher Ansicht,
b) Seitenansicht,
c) in 90° zu Seitenansicht gemäß Figur 2 b gedrehter Seitenansicht,
d) in Draufsicht und
e) in Innenfigur 2 b dargestellter Querschnittsansicht.

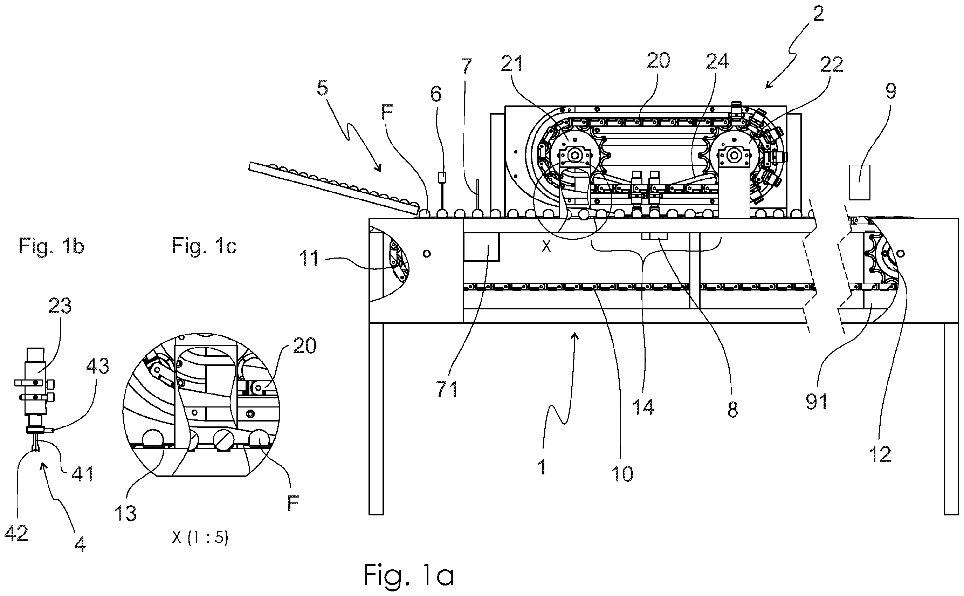

In Figur 1 ist ein Aufführungsbeispiel einer Maschine zum Entsteinen von Früchten in schematischer Seitenansicht dargestellt. Die Maschine weist eine umlaufende Aufnahmeelementebahn 1 auf, die ein um zwei Umlenkräder/- rollen 11, 12 im Kreis geführtes Fördermittel 10 aufweist, an dem eine Vielzahl von Aufnahmeelementen 13 so angeordnet sind, dass von außen zu entsteinende Früchte auf die Aufnahmeelemente 13 auflegbar sind.

Oberhalb der Aufnahmeelementebahn 1 ist eine umlaufende Stößelbahn 2 angeordnet, die ebenfalls ein um Umlenkrollen/-räder 21, 22 kreisgeführtes Fördermittel 20 aufweist. An dem zweiten Fördermittel 20 sind Stößelhalterungen 23 in geeigneter Weise lateral gleich angeordnet wie die Aufnahmeelemente 13 am ersten Fördermittel 10.

Die umlaufende Aufnahmeelementebahn 1 und die umlaufende Stößelbahn 2 werden synchron zu einander angetrieben, wobei bei der umlaufenden Aufnahmeelementebahn 1 ein oberer Teil des in Figur 1 nach rechts laufenden ersten Fördermittels 10 direkt dem unteren, ebenfalls nach rechts laufenden Teil des zweiten Fördermittels 20 der umlaufenden Stößelbahn 2 gegenüber stehen. Dieser Bereich ist die Arbeitsstrecke 14, in deren Verlauf das Entsteinen der Frucht erfolgt. Dafür weist die umlaufende Stößelbahn 2 an ihrem unteren Teillauf ein Kurvenelement 24 auf, dass mit den in den Stößelhalterungen 23 gehaltenen Stößeln 4 derart wechselwirkt, dass die Stößel 4 in der Stößelhalterung 23 vorgeschoben und wieder zurückgeschoben werden. Jeder Stößel 4 besteht insbesondere für das Entsteinen von Kirschen aus einem langen Schaft 41 mit kreuzförmigem Querschnitt, einer Stößelspitze 42 mit konkaver oder V-Form zur Zentrierung des aus der Frucht herauszudrückenden Steins, sowie einem Anlageelement 43, dass an dem Kurvenelement 24 zu Anlage gelangt. Für andere Früchte und deren herauszulösende Steine können auch andere Stößelformen, beispielsweise mit 5- oder 6-sternigem Querschnitt oder/und mit gerader Spitze besonders geeignet sein.

Auf jedem Aufnahmeelement 13 ist ein Napf 3 aus einem elastischen Kunststoff angeordnet. Der Napf 3 weist die in Figur 2 im Detail dargestellte Form auf. Der aus elastischem Kunststoff bestehende Napf 3 hat eine Durchtrittsöffnung 31, die kreuzförmig und passend zum Querschnitt des Schafts 41 des Stößels 4 ausgebildet ist. Darüber hinaus weist der Napf 3 an seiner Oberseite eine konkav oder umgekehrt kegelförmige Aufnahme 32 auf, auf der die zu entsteinende Frucht auflegbar ist. Neben der Durchtrittsöffnung 31 weist der Napf 3 zusätzlich einen Vertikalschlitz 33 auf, der entlang zwei gegenüberliegender Schenkel der kreuzförmigen Durchtrittsöffnung 31 orientiert ist und die Aufnahme 32 zwei teilt.

Im unteren Bereich des Napfes 3 ist eine Nut 34 und ein Wulst 35 ausgebildet, wobei in Einbaurichtung darunter eine Muffe 36 angeformt ist, die sich vom Wulst 35 deutlich verjüngt und mit einer kreisrunden Öffnung (Stegöffnung 37) mit einem Stegbereich quasi als Schlauchabschnitt frei endet. Die Stegöffnung 37 weist dabei einen Innendurchmesser etwas kleiner als die Steine aus den zu entsteinenden Früchten auf.

In besonders bevorzugter Ausgestaltung weist der Napf 3 am Oberrad der Aufnahme 32 über einen Teilbereich eine Randerhöhung 38 auf, die beim Betrieb in Bewegungsrichtung zeigt, sodass die Randerhöhung 38 dazu dient, die von einer Früchtezuführanordnung 5 in Bewegungsrichtung zugeführten Früchte beim Anlegen in den Napf abzubremsen und darin zu halten. Die Früchtezuführanordnung 5 weist dabei bevorzugt auch eine Vorrichtung zum Vereinzeln der Früchte auf, um jede Frucht gezielt einzeln auf die Aufnahmeelemente 13 auszubringen. Damit wird verhindert dass auch mal zwei oder drei Früchte auf einem Aufnahmeelement aufliegen. In diesem Falle würde der Entsteinungsvorgang zumindest für die weiteren darauf anhaftenden Früchte fehlschlagen. Die Früchtezuführanordnung 5 ist in Figur 1 schematisch am stromaufwertigen Ende vor den Arbeitsstrecke 14 dargestellt.

Zwischen der Früchtezuführanordnung 5 und der Arbeitsstrecke 14 sind erste Sensoren 6 vorgesehen, die mit Früchten doppelt belegte Näpfe 3 erfassen können. Die ersten Sensoren 6 können optische, akustische, magnetische und/oder elektrische Sensoren sein, die zusammen mit einer einsprechenden zugeordneten elektronischen Auswerteeinheit die Messwerte analysieren und fehlerhaft belegte Aufnahmeelemente 13 lokalisieren. Diese fehlerhaft mit Früchten belegten Aufnahmeelemente 13 werden sodann von einer Ausblasvorrichtung 7 in einen Aussortierbehälter 71 ausgeblasen.

In ähnlicher Weise erfolgt eine Überwachung des Entsteinvorgangs entlang der Arbeitsstrecke 14 mittels zweiter Sensoren 8, die ebenfalls wieder eine optische, akustische, elektrische und/oder magnetische Erfassung aufweisen können und die Erfassungssignale zu Auswerteeinheit übermitteln. Von der Auswerteeinheit wird dann eine zwei Ausblasvorrichtung 8 stromabwärtig der Arbeitsstrecke 14, jedoch vor der Ausgabe der entsteinten Früchte angeordnet. Die zweite Ausblasvorrichtung 9 bläst nicht ordnungsgemäß entsteinte Früchte in einen Aussortierbehälter 91.

### Bezugszeichenliste

- 1: umlaufende Aufnahmeelementebahn
- 10: erstes Fördermittel
- 11: erste Umlenkrolle/-rad
- 12: zweite Umlenkrolle/-rad
- 13: Aufnahmeelement
- 14: Arbeitsstrecke

- 2: umlaufende Stößelbahn
- 20: zweites Fördermittel
- 21: dritte Umlaufrolle/-rad
- 22: vierte Umlaufrolle/-rad
- 23: Stößelhalterung
- 24: Kurvenelement

- 3: Napf
- 31: Durchtrittsöffnung
- 32: Aufnahme
- 33: Vertikalschlitz
- 34: Nut
- 35: Wulst
- 36: Muffe
- 37: Stegöffnung
- 38: Randerhöhung

- 4: Stößel
- 41: Schaft
- 42: Schaftspitze
- 43: Anlageelement

- 5: Früchtezuführanordnung
- 6: erster Sensor

- 7: erste Ausblasvorrichtung
- 71: Aussortierbehälter

- 8: zweiter Sensor

- 9: zweite Ausblasvorrichtung
- 91: Aussortierbehälter

- F: Frucht

## Patentansprüche

1. Maschine zum Entsteinen von Früchten mit einer Vielzahl von Stößeln (4) und einer Vielzahl von Aufnahmeelementen (13) für die zu entsteinenden Früchte (F), wobei jedes Aufnahmeelement (13) einen eine einzelne Frucht (F) aufnehmenden Napf (3) mit Durchtrittsöffnung (31) für den aus der Frucht (F) herauszulösenden Stein hat, die Aufnahmeelemente (13) auf einer umlaufenden Aufnahmeelementebahn (1) und die Stößel (4) auf einer umlaufenden Stößelbahn (2) entlang einer Arbeitsstrecke (14) parallel und synchron zueinander geführt und entlang der Arbeitsstrecke (14) Mittel zur Ausführung einer Hubbewegung der Stößel (4) relativ auf die Näpfe (3) zu vorgesehen sind, **dadurch gekennzeichnet, dass** stromaufwärtig der Arbeitsstrecke (14) erste Sensoren (6) vorgesehen sind, die mit Früchten doppelt belegte Näpfe (3) erfassen, und dass unterhalb der Arbeitsstrecke (14) zweite Sensoren (8) vorgesehen sind, die den Austritt des Steins erfassen, wobei unterhalb der Durchtrittsöffnung (31) am Napf (3) eine elastische Muffe (36) vorgesehen ist, durch die der aus der Frucht zu entfernende Stein mittels des Stößels (4) durchdrückbar ausgebildet ist.

2. Maschine nach Anspruch 1, **dadurch gekennzeichnet, dass** auf der elastischen Muffe (36) Markierungen, Magnetisierungen oder Dehnungsmessstreifen angeordnet sind, mit deren Hilfe ein Steinaustritt nachgewiesen werden kann.

3. Maschine nach Anspruch 1 oder 2, **dadurch gekennzeichnet, dass** stromabwärtig der Arbeitsstrecke (14) eine Nachlesevorrichtung zum Aussortieren fehlerhaft entsteinter Früchte vor einer Ausgabe der entsteinten Früchte zur Weiterverarbeitung angeordnet ist.

4. Maschine nach Anspruch 3, **dadurch gekennzeichnet, dass** die Nachlesevorrichtung eine zweite Ausblasvorrichtung (9) ist, die eine mit den zweiten Sensoren (8) erkannte, fehlerhaft entsteinte Frucht in ein seitlich zur Transportrichtung an der Aufnahmeelementebahn (1) angeordneten Aussortierbehälter (91) ausbläst.

5. Maschine nach einem der vorangehenden Ansprüche, **dadurch gekennzeichnet, dass** stromaufwärtig der Arbeitsstrecke (14) und stromabwärtig der ersten Sensoren (6) eine Vorauslesevorrichtung zum Aussortieren fehlerhaft auf die Aufnahmeelemente (13) zugeführter Früchte vorgesehen ist.

6. Maschine nach Anspruch 5, **dadurch gekennzeichnet, dass** die Vorauslesevorrichtung eine erste Ausblasvorrichtung (7) ist, die eine mit den ersten Sensoren (6) erkannte, fehlerhaft auf ein Aufnahmeelement (13) zugeführte Frucht oder Früchte in ein seitlich zur Transportrichtung an der Aufnahmeelementebahn (1) angeordneten Aussortierbehälter (71) ausbläst, bevor der Entsteinvorgang beginnt.

7. Maschine nach einem der vorangehenden Ansprüche, **dadurch gekennzeichnet, dass** als erste oder zweite Sensoren (6 oder 8) eine optische, akustische, magnetische Erfassung und/oder eine Erfassung mittels Dehnungsmessstreifen vorgesehen ist.

8. Maschine nach einem der vorangehenden Ansprüche, **dadurch gekennzeichnet, dass** auf der Stößelbahn (2) ein Kurvenelement (24) und für jeden Stößel (4) eine Stößelhalterung (23) vorgesehen sind, wobei die Hubbewegung des in der Stößelhalterung (23) verschiebbar gehalterten Stößels (4) durch das Kurvenelement (24) gesteuert wird.

9. Maschine nach Anspruch 8, **dadurch gekennzeichnet, dass** eine Hülse unter jeder Stößelhalterung (23) vorgesehen ist, die sich bei der Hubbewegung des Stößels (4) auf die Frucht (F) setzt und nach dem Entsteinen die Frucht (F) im Napf (3) zurückhält.

10. Verfahren zum Entsteinen von Früchten mit einer Vielzahl von Stößeln (4) und einer Vielzahl von Aufnahmeelementen (13) für die zu entsteinenden Früchte (F), wobei jedes Aufnahmeelement (13) einen eine einzelne Frucht (F) aufnehmenden Napf (3) mit Durchtrittsöffnung (31) für den aus der Frucht (F) herauszulösenden Stein hat, die Aufnahmeelemente (13) auf einer umlaufenden Aufnahmeelementebahn (1) und die Stößel (4) auf einer umlaufenden Stößelbahn (2) entlang einer Arbeitsstrecke (14) parallel und synchron zueinander geführt und entlang der Arbeitsstrecke (14) Ausführung eine Hubbewegung der Stößel (4) relativ auf die Näpfe (3) zu ausgeführt werden, **dadurch gekennzeichnet, dass** jeder Napf (3) stromaufwärtig der Arbeitsstrecke (14) messtechnisch überwacht wird, ob eine Frucht (F) oder mehrere Früchte aufliegen, wobei die Früchte (F) jedes Napfes (3) mit mehreren Früchten ausgetragen werden, wobei nach dem Austragen der Früchte (F) eines Napfes (3) mit mehreren Früchten dieser Napf (3) stromaufwärtig der Arbeitsstrecke (14) überprüft wird, ob der Fruchtaustrag erfolgte und für den Fall eines fehlerhaften Austrags ein zweiter Austrag mittels Druckluftstoß vorgenommen wird, und dass die Arbeitsstrecke (14) auf einen Steinaustritt unterhalb der Durchtrittsöffnung messtechnisch überwacht wird, wobei die Früchte (F) jedes Napfes (3), aus dem ein Steinaustritt nicht nachgewiesen wurde, stromabwärtig der Arbeitsstrecke (14) ausgetragen wird, wobei nach dem Austragen von fehlerhaft entsteinten Früchten stromabwärtig der Arbeitsstrecke (14) an dem jeweiligen Napf (3) überprüft wird, ob der Fruchtaustrag erfolgte und für den Fall eines fehlerhaften Austrags ein zweiter Austrag mittels Druckluftstoß vorgenommen wird.

## Claims

1. A machine for the de-stoning of fruit, having a plurality of rams (4) and a plurality of receiving elements (13) for the fruit (F) to be de-stoned, wherein each receiving element (13) has a cup (3), receiving an individual item of fruit (F), with a through-passage opening (31) for the stone to be removed from the item of fruit (F), the receiving elements (13), on a circulating receiving element path (1), and the rams (4), on a circulating ram path (2), are guided along a work section (14) in a manner parallel to one another and in synchrony with one another and along the work section (14) there are provided means to carry out a lifting motion of the rams (4) relative to the cups (3), **characterised in that** first sensors (6) are provided upstream of the work section (14) and detect cups (3) occupied by two items of fruit, and **in that** second sensors (8) are provided below the work section (14) and detect exiting of the stone, wherein below the through-passage opening (31) there is an elastic fitting (36) provided at the cup (3) and the design is such that the stone to be removed from the item of fruit can be pushed therethrough by means of the ram (4).

2. A machine according to claim 1, **characterised in that** markings, magnetisations or strain gauges are arranged on the elastic fitting (36), with the aid of which stone exit can be proven.

3. A machine according to claim 1 or 2, **characterised in that** a checking device for sorting out incorrectly de-stoned fruit before discharge of the de-stoned fruit for further processing is arranged downstream of the work section (14).

4. A machine according to claim 3, **characterised in that** the checking device is a second blowing-out device (9) which blows out, into a sorting-out container (91) arranged at the receiving element path (1) in a manner lateral to the transport direction, an incorrectly de-stoned item of fruit detected by the second sensors (8).

5. A machine according to any one of the preceding claims, **characterised in that** a pre-selection device for sorting out fruit incorrectly supplied to the receiving elements (13) is provided upstream of the work section (14) and downstream of the first sensors (6).

6. A machine according to claim 5, **characterised in that** the pre-selection device is a first blowing-out device (7) which, before the start of the de-stoning procedure, blows out, into a sorting-out container (71) arranged at the receiving element path (1) in a manner lateral to the transport direction, fruit which the first sensors (6) have detected was/were incorrectly supplied to a receiving element (13).

7. A machine according to any one of the preceding claims, **characterised in that** an optical, acoustic, magnetic determination and/or a detection by means of strain gauges is provided as first or second sensors (6 or 8).

8. A machine according to any one of the preceding claims, **characterised in that** on the ram path (2) there are provided a cam element (24) and, for each ram (4), a ram holding means (23), wherein the lifting motion of the ram (4) displaceably secured in the ram holding means (23) is controlled by means of the cam element (24).

9. A machine according to claim 8, **characterised in that** a sleeve is provided below each ram holding means (23), which sleeve sits upon the fruit (4) upon the lifting motion of the ram (4) and retains the fruit (F) in the cup (3) after the de-stoning.

10. A method of de-stoning fruit using a plurality of rams (4) and a plurality of receiving elements (13) for the fruit (F) to be de-stoned, wherein each receiving element (13) has a cup (3) which receives an individual item of fruit (F) and which has a through-passage opening (31) for the stone to be removed from the item of fruit (F), the receiving elements (13), on a circulating receiving element path (1), and the rams (4), on a circulating ram path (2), are guided along a work section (14) in a manner parallel to one another and in synchrony with one another and along the work section (14) there are [means for] executing a lifting motions of the rams (4) relative to the cups (3), **characterised in that** each cup (3) is monitored, upstream of the work section (14) and using measurement, as to whether one item of fruit (F) or a plurality of items of fruit rest thereon, wherein the items of fruit (F) of each cup (3) with a plurality of items of fruit are discharged, wherein after the discharge of the items of fruit (F) of one cup (3) with a plurality of items of fruit, this cup (3) is checked upstream of the work section (14) as to whether the fruit discharge took place and a second discharge takes place by means of a blast of compressed air in the event of an incorrect discharge, and **in that** the work section (14) is monitored below the through-passage opening using measurement for stone exit, wherein the fruit (F) of each cup (3), from which stone exit has not been verified, are discharged downstream of the work section (14), wherein after the discharge of incorrectly de-stoned fruit downstream of the work section (14), checking takes place at the respective cup (3) as to whether the fruit discharge took place and a second discharge takes place by means of a blast of compressed air in the event of an incorrect discharge.

## Revendications

1. Machine pour dénoyauter des fruits avec une pluralité de poussoirs (4) et une pluralité d'éléments de logement (13) pour les fruits (F) à dénoyauter, dans laquelle chaque élément de logement (13) a une coupelle (3) logeant un fruit (F) individuel avec une ouverture de passage (31) pour le noyau à détacher du fruit (F), les éléments de logement (13) sont guidés sur une trajectoire d'élément de logement (1) périphérique et les poussoirs (4) sont guidés sur une trajectoire de poussoir (2) périphérique le long d'un parcours de travail (14) de manière parallèle et synchrone les uns par rapport aux autres et des moyens pour exécuter un déplacement de levage des poussoirs (4) par rapport aux coupelles (3) sont à prévoir le long du parcours de travail (14), **caractérisée en ce que** sont prévus en amont du parcours de travail (14) des premiers capteurs (6), qui détectent des coupelles (3) occupées doublement par des fruits, et que sont prévus sous le parcours de travail (14) des deuxièmes capteurs (8), qui détectent la sortie du noyau, dans laquelle est prévu, en dessous de l'ouverture de passage (31), sur la coupelle (3), un manchon (36) élastique, à travers lequel le noyau à retirer du fruit, de par sa réalisation, peut être enfoncé au moyen du poussoir (4).

2. Machine selon la revendication 1, **caractérisée en ce que** sont disposés, sur le manchon élastique (36), des marquages, des magnétisations ou des jauges de contrainte, à l'aide desquels une sortie de noyau peut être démontrée.

3. Machine selon la revendication 1 ou 2, **caractérisée en ce qu'**un dispositif de lecture ultérieure est disposé en aval du parcours de travail (14) pour trier des fruits dénoyautés de manière indue avant une distribution des fruits dénoyautés aux fins du traitement ultérieur.

4. Machine selon la revendication 3, **caractérisée en ce que** le dispositif de lecture ultérieure est un deuxième dispositif de sortie par soufflage (9), qui sort par soufflage un fruit dénoyauté de manière indue, identifié avec les deuxièmes capteurs (8) dans un contenant de tri (91) disposé de manière latérale par rapport à la direction de transport sur la trajectoire d'élément de logement (1).

5. Machine selon l'une quelconque des revendications précédentes, **caractérisée en ce qu'**un dispositif de prélecture est prévu en amont du parcours de travail (14) et en aval des premiers capteurs (6) pour trier des fruits amenés de manière indue sur les éléments de logement (13).

6. Machine selon la revendication 5, **caractérisée en ce que** le dispositif de prélecture est un premier dispositif de sortie par soufflage (7), qui sort par soufflage dans un contenant de tri (71) disposé de manière latérale par rapport à la direction de transport sur la trajectoire d'élément de logement (1) un fruit ou des fruits identifiés avec les premiers capteurs (6), amenés de manière indue sur un élément de logement (13) avant que l'opération de dénoyautage ne commence.

7. Machine selon l'une quelconque des revendications précédentes, **caractérisée en ce qu'**une détection optique, acoustique, magnétique et/ou une détection au moyen de jauges de contrainte sont prévues en tant que premiers ou deuxièmes capteurs (6 ou 8).

8. Machine selon l'une quelconque des revendications précédentes, **caractérisée en ce qu'**un élément à cames (24) est prévu sur la trajectoire de poussoir (2) et un support de poussoir (23) est prévu pour chaque poussoir (4), dans laquelle le déplacement de levage du poussoir (4) maintenu de manière à pouvoir coulisser dans le support de poussoir (23) est commandé par l'élément à cames (24).

9. Machine selon la revendication 8, **caractérisée en ce qu'**une douille est prévue sous chaque support de poussoir (23), laquelle se place sur le fruit (F) lors du mouvement de levage du poussoir (4) et retient le fruit (F) dans la coupelle (3) après le dénoyautage.

10. Procédé de dénoyautage de fruits avec une pluralité de poussoirs (4) et une pluralité d'éléments de logement (13) pour les fruits (F) à dénoyauter, dans lequel chaque élément de logement (13) a une coupelle (3) logeant un fruit (F) individuel avec une ouverture de passage (31) pour le noyau à détacher du fruit (F), les éléments de logement (13) sont guidés sur une trajectoire d'élément de logement (13) périphérique et les poussoirs (4) sont guidés sur une trajectoire de poussoir (2) périphérique le long d'un parcours de travail (14) de manière parallèle et de manière synchrone les uns par rapport aux autres et un déplacement de levage des poussoirs (4) par rapport aux coupelles (3) est exécuté le long du parcours de travail (14), **caractérisé en ce que** chaque coupelle (3) est surveillée par une technique de mesure en amont du parcours de travail (14) pour déterminer si un fruit (F) ou plusieurs fruits s'y trouvent, dans lequel les fruits (F) de chaque coupelle (3) sont évacués avec plusieurs fruits, dans lequel après l'évacuation des fruits (F) d'une coupelle (3) avec plusieurs fruits, ladite coupelle (3) est surveillée en amont du parcours de travail (14) pour déterminer si l'évacuation de fruits a eu lieu et si, dans le cas d'une évacuation indue, une deuxième évacuation est réalisée au moyen d'un jet d'air comprimé, et qu'une sortie de noyau sous l'ouverture de passage sur le parcours de travail (14) est surveillée par une technique de mesure, dans lequel les fruits (F) de chaque coupelle (3), hors de laquelle une sortie de noyau n'a pas été démontrée, sont évacués en aval du parcours de travail (14), dans lequel il est vérifié après l'évacuation de fruits dénoyautés de manière indue en aval du parcours de travail (14) sur la coupelle (3) respective si l'évacuation de fruits a eu lieu et si, dans le cas d'une évacuation indue, une deuxième évacuation est réalisée au moyen d'un jet d'air comprimé.
